# EUROPÄISCHE PATENTSCHRIFT

(11) **EP 4 230 965 B1**
(45) Veröffentlichungstag und Bekanntmachung des Hinweises auf die Patenterteilung: **27.08.2025**
(21) Anmeldenummer: 22157742.2
(22) Anmeldetag: 21.02.2022
(51) Int. Cl.: G01D 3/08, G01R 31/28

(54) **STEUERN EINES SENSORSYSTEMS**
CONTROL OF A SENSOR SYSTEM
COMMANDE D'UN SYSTÈME DE CAPTEUR

(43) Veröffentlichungstag der Anmeldung: 23.08.2023
(73) Patentinhaber: Siemens Aktiengesellschaft, 80333 München (DE)
(72) Erfinder: Tobola, Andreas, 91058 Erlangen (DE)
(74) Vertreter: Siemens Patent Attorneys

(56) Entgegenhaltungen:
- DE-A1- 102017 116 270
- DE-A1- 102018 200 786
- US-A1- 2003 005 747

## Beschreibung

### HINTERGRUND DER ERFINDUNG

### Gebiet der Erfindung

Die vorliegende Erfindung betrifft ein Verfahren zum Steuern eines Sensorsystems und ein zugehöriges System.

### Beschreibung des Stands der Technik

Die Hauptaufgabe eines Sensorsystems besteht darin, die darin integrierten Sensoren auszulesen und die ausgelesen Werte, d.h. die Sensordaten, zumindest aufzubereiten und an eine übergeordnete Einheit, insbesondere eine Edge-Device oder eine Cloud, zu übertragen. Dort werden die Daten von einem oder mehreren Sensorsystem ausgewertet, insbesondere um einen Schaden vorzeitig zu erkennen, so dass ein Bauteil vorausschauend ausgetauscht werden kann, um einen kostspieligeren Schaden oder einen Produktionsanlagenstillstand zu vermeiden.

Wird ein derartiges Sensorsystem mit einer Batterie oder mittels Energy-Harvesting mit Energie versorgt, so wird bereits bei der Konzeption bis hin zum finalen Test des Sensorsystems ein besonderes Augenmerk auf eine niedrige Energieaufnahme gelegt. Die konzeptionellen Maßnahmen betreffen sowohl die Hardware als auch die Software des Sensorsystems.

Durch äußere Störungen im Betrieb eines derartig energiesparsamen Sensorsystems kann es zu einer ungewollt höheren Energieaufnahme kommen. Dies ist insbesondere bei Systemen der Fall, die skalierbar ausgelegt sind, also ihre Energieaufnahme den Gegebenheiten anpassen. Eine Störung, eine ungewollte Modifikation, eine falsche Konfiguration oder das unerlaubte Eindringen in das System kann die Energieaufnahme deutlich beeinflussen. Dieser Effekt wird allerdings zu spät oder nicht rechtzeitig genug erkannt.

DE 10 2017 116270 A1 betrifft ein Verfahren zur Optimierung des Energieverbrauchs eines Sensorsystems. Hierfür wird ein Ablaufplan auf Basis des maximal zulässigen Energieverbrauchs des Sensorsystems erstellt. Da bekannt ist, zu welchem Zeitpunkt der Energiespeicher regeneriert wird, kann der Ablaufplan vorausschauend erstellt werden. Ist beispielsweise die Zeitspanne zwischen zwei Zeitpunkten groß, so werden die Phasen, in denen sich das Sensorsystem im ersten Betriebsmodus befindet, verringert. Ist die Zeitspanne zwischen zwei Zeitpunkten gering, so werden die Phasen, in denen sich das Sensorsystem im ersten Betriebsmodus befindet, erhöht.

Nach US 2003/005747 A1 wird ein Sensorausfall in einem Öl- und Gasfördersystem überwacht und erkannt, indem die Übereinstimmung der Messungen des betreffenden Sensors mithilfe eines computergestützten Prozessmodells mit den Messungen der anderen Sensoren im System überprüft wird. Außerdem wird mit dem Prozessmodell auch einen Ersatzwert für einen ausgefallenen Sensor generiert, indem der Wert identifiziert wird, der am besten mit den Messungen der anderen Sensoren im System übereinstimmt.

DE 10 2018 200786 A1 betrifft ein Verfahren zum Abtasten eines analogen Sensorsignals, mit den Schritten:
Erzeugen von Referenzabtastwerten durch Abtasten des analogen Sensorsignals mit einer vorgegebenen Referenzabtastrate; und Erzeugen von Abtastwerten durch unregelmäßiges Abtasten des analogen Sensorsignals mit einer Durchschnittsabtastrate, wobei die Durchschnittsabtastrate anhand eines Vergleichs einer statistischen Verteilung der Abtastwerte mit einer statistischen Verteilung der Referenzabtastwerte angepasst wird.

Die Aufgabe der Erfindung besteht darin, eine Lösung für ein Sensorsystem bereitzustellen, welche ermöglicht ungewollt höheren Energieaufnahme zu vermeiden.

### Zusammenfassung der Erfindung

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft ein Verfahren zum Steuern eines Sensorsystems, mit den Schritten:
Erfassen eines gemessenen Energieverbrauchsprofils als Verlauf der Leistungsaufnahme des Sensorsystems über die Zeit durch eine Energiemessvorrichtung, Heranziehen erwarteter Energieverbrauchsprofile, Vergleichen des gemessenen Energieverbrauchsprofils mit den erwarteten Energieverbrauchsprofilen, Identifikation eines nächstliegenden Energieverbrauchsprofils aus den erwarteten Energieverbrauchsprofilen, Definition von mindestens eines Steuerbefehls basierend auf dem nächstliegenden Energieverbrauchsprofil und Steuern des Sensorsystems durch Ausführen des mindestens einen Steuerbefehls.

Ein Aspekt der Erfindung besteht darin, dass Abweichungen von einem Sollzustand, welcher ein bevorzugtes erwartetes Energieverbrauchsprofil darstellt, frühzeitig erkannt werden können und Maßnahmen dagegen ergriffen werden können.

Die Energiemessvorrichtung ist eine hardwaremäßige und softwaremäßige Erweiterung des Sensorsystem.

Verwertung der Information über eine Abweichung vom erwarteten Energieverbrauch
Ein Aspekt der Erfindung besteht darin, über eine Messung eines Energieverbrauchsprofils, auch als Energieprofilmessung bezeichenbar, den aktuellen Energiebedarfsverlauf zu ermitteln. Anschließend wird dann das gemessene Energieprofil mit erwarteten Energieverbrauchsprofilen abgeglichen. Die erwarteten Energieverbrauchsprofile können insbesondere durch ein Modell bestimmt werden. Stimmen das gemessene Energieverbrauchsprofil mit einem bevorzugten erwarteten Energieverbrauchsprofile, insbesondere im Rahmen einer definierbaren Toleranz, überein, so ist keine weitere Aktion erforderlich. Das bevorzugte erwartete Energieverbrauchsprofil kann auch als Energieverbrauchsprofil eines Normalzustands bezeichnet werden.

Stimmt das aktuelle Energieprofil dagegen nicht mit dem bevorzugten erwarteten Energieverbrauchsprofil überein, so ist das ein Indiz für mindestens eine Fehlerquelle. Das jeweilige nächstliegende Energieverbrauchsprofil kann Aufschluss über die Fehlerquelle geben. Dadurch ergibt sich der Vorteil, dass neben dem erwarteten Normalzustand auch verschiedene Fehlerzustände erkannt werden.

Fehlerquellen, welche insbesondere erkannt werden können, sind:
Sicherheitskritische Manipulation der Hardware oder Software des Sensorsystems,
Ein unerlaubtes Eindringen in das System,
Ungewollte Modifikation,
Fehlerhafte Konfiguration des Sensorsystems,
Abweichungen der erwarteten Firmware-Version,
Teildefekt der Hardware, insbesondere Überhitzung und/oder übermäßige Erschütterung,
Unsachgemäße Installation,
Betrieb außerhalb der Zweckbestimmung und/oder Äußere Störeinflüsse.

Die Idee der Erfindung ist im Folgenden anhand von zwei Ausführungen erläutert:
Szenario A: Normalzustand
Szenario B: Sensor-Hardware-Fehler

### Szenario A:

Hier bildet das Energieaufnahmemodell den Normalzustand ab. Im Normalzustand arbeitet das reale Sensorsystem nach einem festgelegten Muster. Das Sensorsystem, befindet sich zunächst im (P1) Schlafmodus, (P2) wacht im nächsten Schritt auf, (P3) führt anschließen eine Messung durch, (P4) überträgt das Ergebnis der Messung drahtlos, und (P5) begibt sich schließlich wieder in den Schlafzustand. In jeder Phase P1 bis P5 wird eine bestimme Leistungsaufnahme erwartet. Daraus ergibt sich ein Energieprofil, ein Verlauf der Leistungsaufnahme des Sensorsystems über der Zeit. Dieses Energieprofil wird von der Energiemessvorrichtung erfasst. Es folgt ein Vergleich zwischen Energieaufnahmemodell und Energiemessvorrichtung. Stimmt das Energieprofil mit dem des Energieaufnahmemodell im Szenario "Normalzustand" überein, so kann vom gewünschten Normalzustand ausgegangen werden.

### Szenario B:

In diesem Szenario wird ebenfalls ein Messzyklus wie in Szenario A erwartet allerdings wird davon ausgegangen, dass ein Sensor durch einen Hardwaredefekt eine höhere Leistungsaufnahme verursacht. Die höhere Leistungsaufnahme zeigt sich durch eine Zunahme der Energieaufnahme in bestimmten Phasen. So ist z.B. in eine Schlafphase (P1), die Sensorelektronik von der Energieversorgung getrennt. Dagegen in der Aufwachphase (P2) ist der Mikrocontroller im Schlafmodus, die Sensorelektronik, dagegen aktiviert. Das Energieaufnahmemodell stellt in diesem Fall fest, dass der höhere Energiebedarf in der Phase 2 auf einen Sensordefekt zurückzuführen ist, weil das Szenario "Sensordefekt" am nächsten mit diesem Energieprofil übereinstimmt.

In einer Weiterbildung der Erfindung werden die Schritte fortlaufend, permanent oder wiederholt, insbesondere in gleichen zeitlichen Abständen, während eines Einsatzes des Sensorsystems durchgeführt. Das bedeutet, dass ein kontinuierliches Abtasten des gemessenen Energieverbrauchsprofils des Sensorsystems durch die Energiemessvorrichtung erfolgt. Die kontinuierlich gemessenen Energieverbrauchsprofil werden fortlaufend mit den erwarteten Energieverbrauchsprofilen verglichen. Dadurch ist zu jeder Zeit sichergestellt, dass ein nächstliegendes Energieverbrauchsprofil aus den erwarteten Energieverbrauchsprofilen identifiziert werden kann und im Falle einer Abweichung mindestens ein Steuerbefehl basierend auf dem nächstliegenden Energieverbrauchsprofil definiert werden kann, welcher für ein Steuern des Sensorsystems herangezogen wird.

Diese Ausführung hat den Vorteil, dass fortlaufend die energetisch beste Konfiguration (wie oft schlafen, wie oft aufwachen) zur Lösung einer Aufgabe in einer festgelegten Qualität ermittelt und umgesetzt wird.

In einer weiteren Weiterbildung der Erfindung ist jedem erwarteten Energieverbrauchsprofil ein Zustand des Sensorsystems und/oder ein Ausmaß des Zustands zugeordnet. Insbesondere ist der mindestens eine Steuerbefehl, welcher basierend auf dem nächstliegenden Energieverbrauchsprofil definiert wird, außerdem auf den Zustand des Sensorsystems abgestimmt. Das hat den Vorteil, dass über das nächstliegende Energieverbrauchsprofil auf den Zustand des Sensorsystems geschlossen werden kann.

In einer weiteren Weiterbildung der Erfindung umfasst der Zustand des Sensorsystems:
eine Konfiguration des Sensorsystems und/oder
eine Beeinflussung durch Umgebungsbedingungen und/oder
eine Modifikation des Sensorsystems und/oder
ein Hardwaredefekt und/oder
einen Fehlbetrieb und/oder
ein unerlaubter Eingriff.

So können über das nächstliegende Energieverbrauchsprofil verschiedene Zustände des Sensorsystems erkannt werden und gegebenenfalls Maßnahmen oder Steuerbefehle ausgelöst werden.

In einer weiteren Weiterbildung der Erfindung werden die erwarteten Energieverbrauchsprofile von einem Sensorsystemmodel modelliert. Das Sensorsystemmodel fungiert dabei als virtuelles Abbild des realen Sensorsystems. Das Sensorsystemmodel für die vorliegende Anwendung kann auch als Energieaufnahmemodell bezeichnet werden. Das Sensorsystemmodel ist ein Modell für ein bestimmtes Sensorsystem, welches eine Vorhersage der Energieaufnahme anhand der Umgebungsbedingungen und der Sensorsystemkonfiguration liefert.

Das Sensorsystemmodel bildet über die durchgehende Kommunikation mit dem Sensorsystem einen Digitalen Zwilling (DT). Das Sensorsystemmodel wird herangezogen, um die erwarteten Energieverbrauchsprofile zu bestimmen und diese zur Regelung des energetisch besten Energiezustand für das Sensorsystem.

Der Digitalen Zwilling gibt, basierend auf den Umgebungsbedingungen und der Sensorsystemkonfiguration eine Schätzung für die Soll-Energieaufnahme mit einer bekannten Unsicherheit an, um dann im Falle einer messtechnisch signifikanten Abweichung diese fortlaufend frühzeitig festzustellen zu können.

Eine Störung, eine ungewollte Modifikation, eine falsche Konfiguration, oder das unerlaubte Eindringen in das System können damit frühzeitig erkannt werden, um einen deutlich höheren Folgeschaden zu vermeiden, wie insbesondere frühzeitiges leerlaufen der Batterien und damit Ausfall der Sensorsysteme, weiteres Vordringen von Schadsoftware in eine Anlage.

In einer weiteren Weiterbildung der Erfindung ist das Sensorsystemmodel:
in einer Cloud-Umgebung oder
auf einem Edge-Gerät oder
auf dem Sensorsystems
implementiert.

Die Implementierung des Sensorsystemmodels auf dem Sensorsystems hat insbesondere den Vorteil, dass eine mögliche Abweichung von einem Sollzustand von dem Sensorsystem selbst festgestellt werden kann und als ein Qualitätsparameter des Sensorsystems bereitgestellt werden kann. Dies hat den Vorteil, dass das Sensorsystem über eine "self-awarness" verfügt und selbst Aussage über seine Messqualität, auch "Quality of Sensing" geben kann.

In einer weiteren Weiterbildung der Erfindung werden den erwarteten Energieverbrauchsprofilen ein Unsicherheitswert und/oder eine Toleranz zugeordnet ist, welche bei der Identifikation des nächstliegenden Energieverbrauchsprofils berücksichtigt. Dies hat den Vorteil, dass dadurch indirekt gesteuert werden kann, wann Steuerbefehle ausgeführt werden.

In einer weiteren Weiterbildung der Erfindung wird mit der Identifikation eines nächstliegenden Energieverbrauchsprofils eine zugehörige Abweichung bestimmt. Dies hat ebenfalls den Vorteil, dass dadurch indirekt gesteuert werden kann, wann Steuerbefehle ausgeführt werden.

In einer weiteren Weiterbildung der Erfindung umfasst der mindestens eine Steuerbefehl:
eine Energiesteuerung und/oder
eine Energieoptimierung und/oder
eine Reduktion einer eingespeisten Energiemenge und/oder
einer Regelung eines Energiezustand des Sensorsystems und/oder
ein Auslesen eines Warnsignals und/oder
ein Senden einer Fehlermeldung und/oder
ein Senden einer Warnmeldung und/oder
ein Aktivieren eines weiteren Sensorsystems und/oder
ein Abschalten des Sensorsystems.

Die Erfindung umfasst außerdem System ausgebildet ein erfindungsgemäßes Verfahren auszuführen.

In einer Weiterbildung der Erfindung weist das System die folgenden Komponenten auf:
- eine Energiemessvorrichtung, ausgebildet ein gemessenes Energieverbrauchsprofil eines Sensorsystems abzutasten,
- eine Vergleichseinheit, ausgebildet das gemessene Energieverbrauchsprofil mit erwarteten Energieverbrauchsprofilen zu vergleichen,
- eine Identifikationseinheit, ausgebildet ein nächstliegendes Energieverbrauchsprofil aus den erwarteten Energieverbrauchsprofilen zu identifizieren,
- eine Definitionseinheit, ausgebildet den mindestens einen Steuerbefehl basierend auf dem nächstliegenden Energieverbrauchsprofil zu definieren und
- eine Steuereinheit, ausgebildet das Sensorsystem durch Ausführen des mindestens einen Steuerbefehls zu steuern.

In einer Weiterbildung der Erfindung ist die Definitionseinheit als Energiemanagementeinheit ausgebildet, um eine vom Sensorsystem aufgenommenen Energie zu optimieren.

Diese Erweiterung sieht vor, ein erfindungsgemäßes Sensorsystemmodel fortlaufend mit Daten zu versorgen, wobei das Sensorsystemmodel für das Sensorsystem die energetisch beste Konfiguration, insbesondere bezüglich Schlaf- und Aufwachzyklen, zur Lösung einer Aufgabe in einer festgelegten Qualität ermittelt und diese dem Sensorsystem mitteilt.

Die gewünschte Qualität wird für verschiedene Fall vorgegeben, vom Anwender angefordert oder durch ein Regelwerk festgelegt. Es wird angenommen, dass es eine Lösung gibt, die umgesetzt wird. Daraus ergäbe sich eine bestimmte Energieaufnahme. Diese Erweiterung der Erfindung besteht insbesondere darin, den energetisch besten Energiezustand für das Sensorsystem über einen Digital Twin zu regeln, sofern es mehrere Lösungen gibt.

Zusammengefasst bietet die Erfindung und ihre Ausführungsformen die folgenden Vorteile:
1. Fortlaufend Abweichungen im Betrieb eines Sensorsystems festzustellen
2. Fortlaufend für das Sensorsystem den bestmöglichen Energiezustand zu ermitteln
3. Fortlaufend ein Qualitätsmaß ("Quality of Sensing") für das Sensorsystem hinsichtlich des Energieverbrauchs zu ermitteln, unter der Annahme, dass eine Betriebsstörung auch Auswirkungen auf die Genauigkeit der durch das Sensorsystem ermittelte Messgrößen haben kann.

### Kurze Beschreibung der Zeichnungen

Die Besonderheiten und Vorteile der Erfindung werden aus den nachfolgenden Erläuterungen mehrerer Ausführungsbeispiele anhand der schematischen Zeichnungen ersichtlich.

Es zeigen
Fig. 1 ein Ablaufdiagramm des erfindungsgemäßen Verfahrens und
Fig. 2 eine schematische Darstellung eines Sensorsystems und eines Sensorsystemmodels.

### Detaillierte Beschreibung der Erfindung

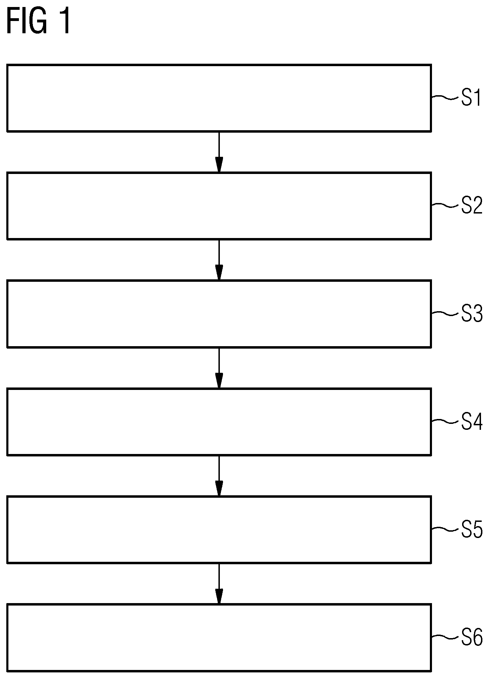

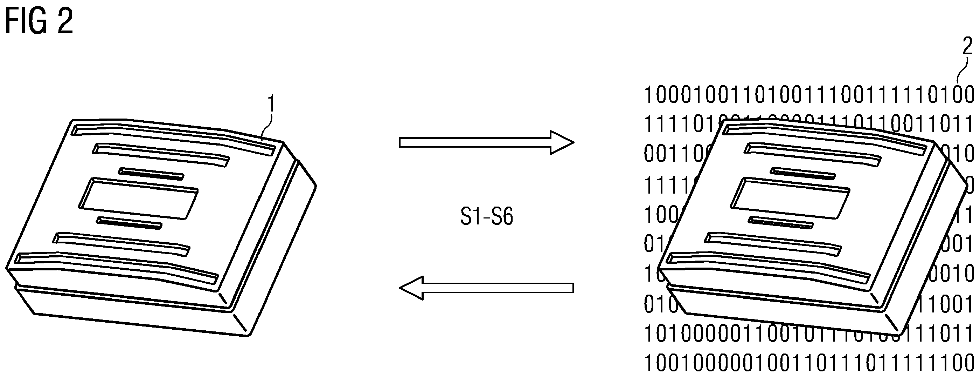

Fig. 1 zeigt ein Ablaufdiagramm des erfindungsgemäßen Verfahrens. Das Verfahren umfasst die folgenden Schritte:
Schritt S1: Abtasten eines gemessenen Energieverbrauchsprofils des Sensorsystems 1 (dargestellt in Fig. 2) durch eine Energiemessvorrichtung,
Schritt S2: Heranziehen erwarteter Energieverbrauchsprofile,
Schritt S3: Vergleichen des gemessenen Energieverbrauchsprofils mit den erwarteten Energieverbrauchsprofilen,
Schritt S4: Identifikation eines nächstliegenden Energieverbrauchsprofils aus den erwarteten Energieverbrauchsprofilen,
Schritt S5: Definition von mindestens eines Steuerbefehls basierend auf dem nächstliegenden Energieverbrauchsprofil und
Schritt S6: Steuern des Sensorsystems 1 durch Ausführen des mindestens einen Steuerbefehls.

Die Vorteile des Verfahrens ist mit weiteren Ausführungsformen oben beschrieben.

Fig. 2 zeigt eine schematische Darstellung eines Sensorsystems 1 und eines Sensorsystemmodels 2.

Ein digitaler Zwilling besteht definitionsgemäß aus drei wesentlichen Teilen: einem Asset in der realen Welt, dem Sensorsystem 1, einem Asset in der virtuellen Welt, dem Sensorsystemmodel 2, und einer permanenten Kommunikation zwischen dem Sensorsystem 1 und dem Sensorsystemmodel 2.

In einer dieser Ausführung der Erfindung werden die erwarteten Energieverbrauchsprofile von dem Sensorsystemmodel 2 modelliert. Das Sensorsystemmodel 2 fungiert dabei als virtuelles Abbild des realen Sensorsystems 1. Das Sensorsystemmodel 2 für die vorliegende Anwendung kann auch als Energieaufnahmemodell 2 bezeichnet werden. Das Sensorsystemmodel 2 ist ein Modell 2 für ein bestimmtes Sensorsystem 1, welches eine Vorhersage oder Erwartung der Energieaufnahme anhand der Umgebungsbedingungen und der Konfiguration des Sensorsystems liefert.

## Patentansprüche

1. Verfahren zum Steuern eines Sensorsystems (1), mit den Schritten:
Erfassen (S1) eines gemessenen Energieverbrauchsprofils als Verlauf der Leistungsaufnahme des Sensorsystems (1) über die Zeit durch eine Energiemessvorrichtung,
Heranziehen (S2) erwarteter Energieverbrauchsprofile,
Vergleichen (S3) des gemessenen Energieverbrauchsprofils mit den erwarteten Energieverbrauchsprofilen,
Identifikation (S4) eines nächstliegenden Energieverbrauchsprofils aus den erwarteten Energieverbrauchsprofilen,
Definition (S5) von mindestens eines Steuerbefehls basierend auf dem nächstliegenden Energieverbrauchsprofil und
Steuern (S6) des Sensorsystems (1) durch Ausführen des mindestens einen Steuerbefehls.

2. Verfahren nach Anspruch 1,
wobei die Schritte wiederholt, insbesondere in gleichen zeitlichen Abständen, während eines Einsatzes des Sensorsystems (1) durchgeführt werden.

3. Verfahren nach einem der vorhergehenden Ansprüche,
wobei jedem erwarteten Energieverbrauchsprofil ein Zustand des Sensorsystems (1) zugeordnet ist und
wobei der mindestens eine Steuerbefehl, welcher basierend auf dem nächstliegenden Energieverbrauchsprofil definiert wird, auf den Zustand des Sensorsystems (1) abgestimmt ist.

4. Verfahren nach Anspruch 3,
wobei der Zustand des Sensorsystems(1):
eine Konfiguration des Sensorsystems (1) und/oder
eine Beeinflussung durch Umgebungsbedingungen und/oder
eine Modifikation des Sensorsystems (1) und/oder
ein Hardwaredefekt und/oder
einen Fehlbetrieb und/oder
ein unerlaubter Eingriff
umfasst.

5. Verfahren nach einem der vorhergehenden Ansprüche,
wobei die erwarteten Energieverbrauchsprofile von einem Sensorsystemmodel (2) modelliert werden.

6. Verfahren nach Anspruch 5, wobei das Sensorsystemmodel (2):
in einer Cloud-Umgebung oder
auf einem Edge-Gerät oder
auf dem Sensorsystems (1)
implementiert ist.

7. Verfahren nach einem der vorhergehenden Ansprüche,
wobei den erwarteten Energieverbrauchsprofilen ein Unsicherheitswert und/oder eine Toleranz zugeordnet ist, welche bei der Identifikation des nächstliegenden Energieverbrauchsprofils berücksichtigt werden.

8. Verfahren nach einem der vorhergehenden Ansprüche,
wobei mit der Identifikation eines nächstliegenden Energieverbrauchsprofils eine zugehörige Abweichung bestimmt wird.

9. Verfahren nach einem der vorhergehenden Ansprüche,
wobei der mindestens eine Steuerbefehl:
eine Energiesteuerung und/oder
eine Energieoptimierung und/oder
eine Reduktion einer eingespeisten Energiemenge und/oder
einer Regelung eines Energiezustand des Sensorsystems und/oder
ein Auslesen eines Warnsignals und/oder
ein Senden einer Fehlermeldung und/oder
ein Senden einer Warnmeldung und/oder
ein Aktivieren eines weiteren Sensorsystems (1) und/oder
ein Abschalten des Sensorsystems (1)
umfasst.

10. System umfassend Mittel zur Ausführung des Verfahren nach einem der vorherigen Ansprüche auszuführen.

11. System nach Anspruch 10, aufweisend:
- eine Energiemessvorrichtung, ausgebildet ein gemessenes Energieverbrauchsprofil eines Sensorsystems (1) abzutasten,
- eine Vergleichseinheit, ausgebildet das gemessene Energieverbrauchsprofil mit erwarteten Energieverbrauchsprofilen zu vergleichen,
- eine Identifikationseinheit, ausgebildet ein nächstliegendes Energieverbrauchsprofil aus den erwarteten Energieverbrauchsprofilen zu identifizieren,
- eine Definitionseinheit, ausgebildet den mindestens einen Steuerbefehl basierend auf dem nächstliegenden Energieverbrauchsprofil zu definieren und
- eine Steuereinheit, ausgebildet das Sensorsystem (1) durch Ausführen des mindestens einen Steuerbefehls zu steuern.

12. System nach Anspruch 11,
wobei die Definitionseinheit als Energiemanagementeinheit ausgebildet, welche ausgebildet ist, eine vom Sensorsystem aufgenommenen Energie zu optimieren.

## Claims

1. Method for controlling a sensor system (1), having the steps of:
sensing (S1) a measured energy consumption profile as a progression of the power consumption of the sensor system (1) over time by means of an energy measuring apparatus,
using (S2) expected energy consumption profiles,
comparing (S3) the measured energy consumption profile with the expected energy consumption profiles,
identifying (S4) a closest energy consumption profile from the expected energy consumption profiles,
defining (S5) at least one control command on the basis of the closest energy consumption profile, and
controlling (S6) the sensor system (1) by executing the at least one control command.

2. Method according to Claim 1,
wherein the steps are carried out repeatedly, in particular at equal intervals of time, during use of the sensor system (1).

3. Method according to either of the preceding claims, wherein a state of the sensor system (1) is assigned to each expected energy consumption profile, and
wherein the at least one control command, which is defined on the basis of the closest energy consumption profile, is matched to the state of the sensor system (1).

4. Method according to Claim 3,
wherein the state of the sensor system (1) comprises:
a configuration of the sensor system (1), and/or an influence caused by environmental conditions, and/or a modification of the sensor system (1), and/or a hardware defect, and/or
a malfunction, and/or
unauthorized intervention

5. Method according to one of the preceding claims,
wherein the expected energy consumption profiles are modelled by a sensor system model (2).

6. Method according to Claim 5,
wherein the sensor system model (2) is implemented:
in a cloud environment, or
on an edge device, or
on the sensor system (1)

7. Method according to one of the preceding claims,
wherein the expected energy consumption profiles are assigned an uncertainty value and/or a tolerance which is/are taken into account when identifying the closest energy consumption profile.

8. Method according to one of the preceding claims,
wherein an associated deviation is determined with the identification of a closest energy consumption profile.

9. Method according to one of the preceding claims,
wherein the at least one control command comprises:
energy control, and/or
energy optimization, and/or
a reduction in an amount of energy that is fed in, and/or regulation of an energy state of the sensor system, and/or reading a warning signal, and/or
transmitting an error message, and/or
transmitting a warning message, and/or
activating a further sensor system (1), and/or
switching off the sensor system (1)

10. System comprising means for carrying out the method according to one of the preceding claims.

11. System according to Claim 10, having:
- an energy measuring apparatus designed to sense a measured energy consumption profile of a sensor system (1),
- a comparison unit designed to compare the measured energy consumption profile with expected energy consumption profiles,
- an identification unit designed to identify a closest energy consumption profile from the expected energy consumption profiles,
- a definition unit designed to define the at least one control command on the basis of the closest energy consumption profile, and
- a control unit designed to control the sensor system (1) by executing the at least one control command.

12. System according to Claim 11,
wherein the definition unit is in the form of an energy management unit which is designed to optimize energy consumed by the sensor system.

## Revendications

1. Procédé de commande d'un système de capteur (1) comprenant les étapes consistant à :
saisir (S1) un profil mesuré de consommation d'énergie sous forme d'une évolution de la consommation électrique du système de capteur (1) dans le temps mesurée par un dispositif de mesure d'énergie,
relever (S2) des profils attendus de consommation d'énergie,
comparer (S3) le profil de consommation d'énergie mesuré aux profils de consommation d'énergie attendus,
identifier (S4) un profil de consommation d'énergie le plus proche parmi les profils de consommation d'énergie attendus,
définir (S5) au moins une commande sur la base du profil de consommation d'énergie le plus proche, et
commander (S6) le système de capteur (1) par réalisation de l'au moins une commande.

2. Procédé selon la revendication 1, dans lequel les étapes sont effectuées de façon répétée, en particulier à intervalles réguliers, pendant une utilisation du système de capteur (1).

3. Procédé selon l'une des revendications précédentes, dans lequel à chaque profil de consommation d'énergie attendu est affecté un état du système de capteur (1), et dans lequel l'au moins une commande définie en se basant sur le profil de consommation d'énergie le plus proche est coordonnée à l'état du système de capteur (1).

4. Procédé selon la revendication 3, dans lequel l'état du système de capteur (1) comprend :
une configuration du système de capteur (1) et/ou
une influence des conditions environnementales et/ou
une modification du système de capteur (1) et/ou
un défaut matériel et/ou
un mauvais fonctionnement et/ou
une intervention non autorisée.

5. Procédé selon l'une des revendications précédentes, dans lequel les profils de consommation d'énergie attendus sont modélisés par un modèle de système de capteur (2).

6. Procédé selon la revendication 5, dans lequel le modèle de système de capteur (2) est mis en œuvre:
dans un environnement du Cloud ou
sur un dispositif edge ou
sur le système de capteur (1).

7. Procédé selon l'une des revendications précédentes, dans lequel aux profils de consommation d'énergie attendus est affectée une valeur d'incertitude et/ou une tolérance qui est prise en compte lors de l'identification du profil de consommation d'énergie le plus proche.

8. Procédé selon l'une des revendications précédentes, dans lequel à l'identification d'un profil de consommation d'énergie le plus proche est déterminé un écart correspondant.

9. Procédé selon l'une des revendications précédentes, dans lequel l'au moins une commande comprend :
une commande d'énergie et/ou
une optimisation d'énergie et/ou
une réduction d'une quantité d'énergie emmagasinée et/ou une régulation d'un état énergétique du système de capteur et/ou
une lecture d'un signal d'alerte et/ou
un envoi d'un message d'erreur et/ou
un envoi d'un message d'alerte et/ou
une activation d'un autre système de capteur (1) et/ou
une désactivation du système de capteur (1).

10. Système comprenant des moyens de réaliser le procédé selon l'une quelconque des revendications précédentes.

11. Système selon la revendication 10, présentant :
- un dispositif de mesure d'énergie conçu pour échantillonner un profil de consommation d'énergie mesuré pour un système de capteur (1),
- une unité de comparaison conçue pour comparer le profil de consommation d'énergie mesuré avec des profils de consommation d'énergie attendus,
- une unité d'identification conçue pour identifier un profil de consommation d'énergie le plus proche parmi les profils de consommation d'énergie attendus,
- une unité de définition conçue pour définir l'au moins une commande sur la base du profil de consommation d'énergie le plus proche, et
- une unité de commande conçue pour commander le système de capteur (1) par réalisation de l'au moins une commande.

12. Système selon la revendication 11, dans lequel l'unité de définition est conçue comme une unité de gestion d'énergie conçue pour optimiser une énergie reçue pour le système de capteur.
